# DEMANDE DE BREVET EUROPEEN

(11) **EP 4 450 318 A1**
(43) Date de publication de la demande: **23.10.2024**
(21) Numéro de dépôt: 24169669.9
(22) Date de dépôt: 11.04.2024
(51) Int. Cl.: B60L 50/53, B60M 3/00

(54) **PROCÉDÉ D'AJUSTEMENT DU FONCTIONNEMENT D'UN SYSTÈME D' ALIMENTATION ÉLECTRIQUE DE VÉHICULES FERROVIAIRES, PRODUIT PROGRAMME D'ORDINATEUR, DISPOSITIF ÉLECTRONIQUE D'AJUSTEMENT ET SYSTÈME D'ALIMENTATION ÉLECTRIQUE ASSOCIÉS**

(30) Priorité: 11.04.2023 FR 2303589
(71) Demandeur: ALSTOM Holdings, 93400 Saint-Ouen-sur-Seine (FR)
(72) Inventeur: AUTHIE, Pierre, 78170 LA CELLE SAINT CLOUD (FR); IORDACHE, Marius, 75019 PARIS (FR)
(74) Mandataire: Lavoix

(57) **Abrégé**

La présente invention concerne un procédé d'ajustement du fonctionnement d'un système d'alimentation électrique (15) d'un ensemble de véhicules ferroviaires (5). Le système d'alimentation comprend une pluralité de sous-stations de traction (20).

Chaque sous-station de traction est propre à échanger de la puissance électrique avec au moins l'un des véhicules ferroviaires et comprend un organe (30) de réglage de sa tension à vide.

Le procédé comprend une acquisition, depuis chaque sous-station de traction, de données représentatives d'un échange de puissance électrique entre ladite sous-station et au moins un des véhicules ferroviaires. Le procédé comprend en outre une détermination, d'une périodicité des données acquises, et une détermination d'une valeur actualisée de la tension à vide correspondant à chaque sous-station.

Le procédé comprend en outre un envoi, à l'organe de réglage de chaque sous-station de traction, de la valeur actualisée de la tension à vide correspondant à cette sous-station de traction.

## Description

La présente invention concerne un procédé d'ajustement du fonctionnement d'un système d'alimentation électrique de véhicule ferroviaire.

L'invention concerne également un dispositif électronique d'ajustement propre à mettre en oeuvre un tel procédé.

L'invention concerne également un produit programme d'ordinateur comprenant des instructions logicielles propres à mettre en oeuvre un tel procédé.

L'invention concerne également un système d'alimentation électrique de véhicule ferroviaire.

L'invention est applicable au domaine de l'alimentation électrique de véhicules ferroviaires. Plus particulièrement, l'invention est applicable au domaine de l'alimentation de véhicules ferroviaires du type tramway ou métro, alimentés par un ensemble de sous-stations de traction.

Dans la description qui suit, les dénominations « sous-station de traction » et « sous-station » sont équivalentes.

De manière connue en soi, les véhicules ferroviaires de métro ou de tramways sont alimentés en courant continu depuis une pluralité de sous-stations. La demande de puissance électrique des véhicules ferroviaires est variable en fonction de leur localisation et des manoeuvres qu'ils doivent réaliser : accélération, freinage, démarrage, arrêt. Ainsi, lorsqu'une flotte de véhicules ferroviaires est en circulation sur des voies, la quantité de puissance délivrée par chaque sous-station n'est pas constante. Du point de vue de chaque sous-station, cette quantité de puissance est appelée ci-après charge.

Un calibrage de chaque sous-station définit la quantité moyenne de puissance électrique que chaque sous-station est propre à fournir à un ou plusieurs véhicules ferroviaires. Cette quantité moyenne est appelée ci-après calibre.

Dans le cas où chaque sous-station présente une tension à vide constante, certaines sous-stations sont plus sollicitées que d'autres pour fournir de la puissance électrique aux véhicules ferroviaires. Ceci conduit notamment à un calibrage plus important des sous-stations les plus sollicitées. Un déséquilibre se crée alors entre les sous-stations.

L'expression « tension à vide » est entendue ici au sens de la tension aux bornes d'une sous-station lorsqu'elle n'échange pas de puissance électrique avec au moins un véhicule ferroviaire, i.e. lorsque sa charge est nulle.

En outre, dans une logique de standardisation, le calibre de chaque sous-station est préférentiellement identique à celui d'une autre sous-station. Ainsi, les sous-stations les moins sollicitées sont surdimensionnées vis-à-vis de leur utilisation.

On connait du document « Design of power supply system in DC electrified transitrade ways-influence of the high voltage network », de Denis Seinbille, une étude de l'influence de la tension à vide de chaque sous-station sur sa charge, et ce dans le but d'équilibrer la charge provenant de chacune des sous-stations.

Cependant, dans le document précité, les paramètres du système ferroviaire formé de la pluralité de véhicules sont supposés connus lors d'une étape de conception de chaque sous-station. En effet, dans le document précité, un intervalle temporel entre deux véhicules ferroviaires ainsi que le nombre de véhicules ferroviaires ou la localisation des sous-stations, sont des paramètres *a priori* connus et considérés constants pour le réglage de la tension à vide de chaque sous-station.

Cependant, au cours de l'évolution du trafic des véhicules ferroviaires, ces paramètres peuvent être amenés à évoluer. Ainsi, les paramètres préconçus des valeurs de tension à vide des sous-stations ne sont plus optimaux.

Il existe donc un besoin de rendre les sous-stations plus adaptables.

A cet effet, l'objet de l'invention est un procédé d'ajustement du fonctionnement d'un système d'alimentation électrique d'un ensemble de véhicules ferroviaires, le système d'alimentation comprenant une pluralité de sous-stations de traction ;
chaque sous-station de traction étant propre à échanger de la puissance électrique avec au moins l'un des véhicules ferroviaires et comprenant un organe de réglage de sa tension à vide ;
le procédé étant mis en oeuvre par un dispositif électronique d'ajustement et comprenant les étapes suivantes:
   - acquisition, depuis chaque sous-station de traction, de données représentatives d'un échange de puissance électrique entre ladite sous-station et au moins un des véhicules ferroviaires ;
   - détermination, d'une périodicité des données acquises ;
   - détermination, pour chaque sous-station de traction, d'une valeur actualisée de la tension à vide correspondant à cette sous-station à partir d'une grandeur dépendant des données représentatives d'un échange de puissance électrique entre ladite sous-station de traction et au moins un des véhicules ferroviaires, la grandeur dépendant de préférence également de la périodicité déterminée lors de la première étape de détermination,
   - envoi, à l'organe de réglage de chaque sous-station de traction, de la valeur actualisée de la tension à vide correspondant à cette sous-station de traction.

Ainsi, grâce à la première étape de détermination du procédé selon l'invention, les valeurs de tension à vide de chaque sous-station sont recalculées en fonction de l'état du système ferroviaire à un instant courant.

Suivant d'autres aspects avantageux de l'invention, le procédé d'ajustement comprend une ou plusieurs des caractéristiques suivantes, prises isolément ou suivant toutes les combinaisons techniquement possibles :
- les données représentatives d'un échange de puissance électrique entre ladite sous-station et au moins un des véhicules ferroviaires comprennent au moins l'un parmi:
   - un courant circulant entre ladite sous-station et un des véhicules ; et
   - une puissance électrique échangée entre ladite sous-station et un des véhicules ;
- suite à l'étape d'envoi, le procédé est réitéré au moins une fois ;
- l'étape de détermination de périodicité comprend la comparaison des données acquises dans un intervalle temporel prédéfini précédant un instant courant, aux données acquises dans un intervalle antérieur de même durée,
   si les données acquises dans l'intervalle temporel prédéfini précédant l'instant courant sont sensiblement égales aux données acquises dans l'intervalle antérieur, la périodicité est égale à un décalage entre l'intervalle temporel prédéfini précédant l'instant courant et l'intervalle antérieur ;
- l'étape de détermination de valeurs actualisées de tension à vide comprend, pour chaque sous-station, l'application, à la grandeur dépendant des données représentatives d'un échange de puissance électrique entre ladite sous-station et au moins un des véhicules ferroviaires, de l'un parmi un algorithme d'optimisation et un modèle pré-entraîné par apprentissage automatique, pour obtenir, pour chaque sous-station, une valeur actualisée de tension à vide destinée à égaliser ladite grandeur entre chaque sous-station ; et
- si l'étape de détermination d'une périodicité des données acquises échoue, l'étape suivante est une nouvelle étape d'acquisition des données.

L'invention a également pour objet un produit programme d'ordinateur comprenant des instructions logicielles qui, lorsque mises en oeuvre par un équipement informatique, mettent en oeuvre un tel procédé d'ajustement.

L'invention a également pour objet un dispositif électronique d'ajustement comprenant des moyens techniques adaptés pour implémenter un tel procédé d'ajustement.

L'invention a également pour objet un système d'alimentation électrique comprenant un ensemble de sous-stations de traction et un tel dispositif électronique d'ajustement, chaque sous-station étant propre à échanger une puissance électrique avec au moins un véhicule ferroviaire, chaque sous-station de traction comprenant un organe de réglage d'une tension à vide de la sous-station.

Selon un aspect avantageux de l'invention, le système d'alimentation électrique comprend la caractéristique suivante :
- l'organe de réglage de chaque sous-station est un convertisseur électronique pilotable configuré pour régler la tension à vide de ladite sous-station par logiciel.

Ces caractéristiques et avantages de l'invention apparaîtront à la lecture de la description qui va suivre, donnée à titre d'exemple non limitatif, et faite en référence aux dessins annexés, sur lesquels :
- [Fig 1] la figure 1 est une vue schématique d'un système ferroviaire comprenant un système d'alimentation électrique et un dispositif électronique d'ajustement selon l'invention ; et
- [Fig 2] la figure 2 est un organigramme d'un procédé d'ajustement mis en oeuvre par le dispositif électronique d'ajustement de la figure 1.

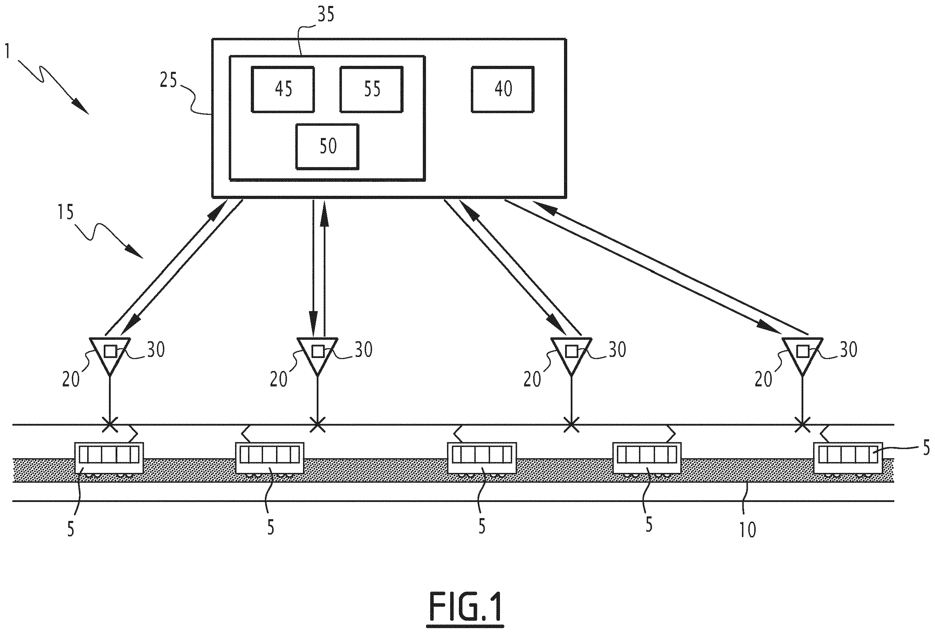

En référence à la figure 1, un système ferroviaire 1 comprend une pluralité de véhicules ferroviaires 5 en circulation sur des voies 10, et un système 15 d'alimentation électrique desdits véhicules 5.

Le système d'alimentation 15 comprend un ensemble de sous-stations 20 de traction et un dispositif électronique 25 d'ajustement de la tension à vide de chaque sous-station 20.

Chaque sous-station 20 est destinée à alimenter électriquement les véhicules ferroviaires 5. A cet effet, chaque sous-station 20 est reliée au réseau de distribution d'électricité et comprend par exemple un groupe transformateur-redresseur (non-représenté) configuré pour convertir une tension du réseau de distribution en une tension d'alimentation des véhicules 5. Ainsi, chaque sous-station 20 présente une tension à vide.

De manière connue en soi, lors de la circulation d'un véhicule 5, la sous-station 20 alimentant ce véhicule 5 sera préférentiellement la sous-station voisine 20 ayant la tension à vide la plus élevée.

Chaque sous-station 20 est propre à envoyer au dispositif électronique d'ajustement 25 des données représentatives d'un échange de puissance électrique entre au moins cette sous-station 20 et au moins un véhicule ferroviaire 5. Plus spécifiquement, on entend par « données représentatives d'un échange de puissance électrique » des données caractéristiques de la présence d'un échange de puissance entre au moins une sous-station 20 et au moins un véhicule ferroviaire 5.

Les données représentatives d'un échange sont préférentiellement au moins l'un parmi un courant circulant entre ladite sous-station 20 et au moins un des véhicules 5 et une puissance électrique échangée entre ladite sous-station 20 et au moins un des véhicules 5.

En variante ou en complément facultatif, chaque sous-station 20 est propre à récupérer, depuis un véhicule 5 respectif, de la puissance électrique lors du freinage dudit véhicule 5.

Selon ce complément facultatif, les données représentatives d'un échange comprennent des données représentatives d'une fourniture de puissance par la sous-station et des données représentatives d'une récupération de puissance par la sous-station.

Selon une variante de ce complément, les données représentatives d'un échange sont égales à la différence entre les données représentatives d'une fourniture de puissance par la sous-station et des données représentatives d'une récupération de puissance par la sous-station. Par convention, la puissance électrique échangée entre ladite sous-station 20 et au moins un des véhicules 5 est positive si la sous-station alimente le véhicule 5. Au contraire, la puissance électrique échangée entre ladite sous-station 20 et au moins un des véhicules 5 est négative si la sous-station reçoit de la puissance électrique par le véhicule 5 via son freinage.

Chaque sous-station 20 comprend un organe 30 de réglage de la tension à vide de ladite sous-station 20. Chaque organe de réglage 30 est configuré pour, en fonction d'une commande reçue, régler la tension à vide de la sous-station 20 correspondante. A cet effet, chaque organe de réglage 30 est avantageusement un convertisseur électronique pilotable, configuré pour régler la tension à vide de la sous-station 20 correspondante, par logiciel. A titre d'exemple, chaque organe de réglage 30 comprend un convertisseur à transistors bipolaires à grille isolée (IGBT, de l'anglais *Insulated Gate Bipolar Transistor*). Le convertisseur est configuré pour moduler, via ses transistors IGBT, un découpage d'une tension du réseau de distribution. Ainsi, le découpage est commandé de façon logicielle afin de répondre à différentes contraintes et optimisation. En outre, cela permet d'intégrer dans la commande de découpage une tension à vide en supplément de ce qui est couramment pratiqué.

Dans l'exemple de la figure 1, le dispositif d'ajustement 25 comprend une unité de traitement d'information formée par exemple d'une mémoire 35 et d'un processeur 40 associé à la mémoire 35.

Dans cet exemple, la mémoire 35 est propre à stocker un programme informatique comprenant au moins un logiciel, brique logicielle, module logiciel, ou plus simplement module. Plus spécifiquement, la mémoire 35 stocke un module d'acquisition 45, un module de traitement 50, et un module d'envoi 55.

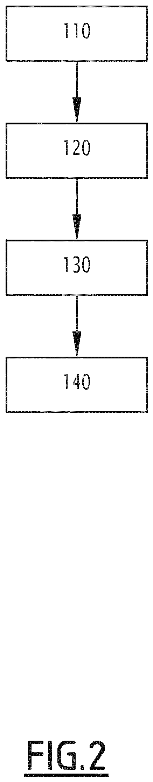

Le dispositif d'ajustement 25 est préférentiellement centralisé par rapport à l'ensemble des véhicules. Le dispositif d'ajustement 25, et plus précisément le module d'acquisition 45, le module de traitement 50 et le module d'envoi 55 sont configurés pour mettre en oeuvre un procédé d'ajustement du fonctionnement du système d'alimentation 15, qui sera décrit ci-après, en référence à la figure 2 représentant un organigramme dudit procédé.

Lors d'une étape d'acquisition 110, le module d'acquisition 45 acquiert, depuis chaque sous-station 20, les données représentatives d'un échange de puissance électrique entre ladite sous-station 20 et au moins un des véhicules ferroviaires 5.

Avantageusement, lors de l'étape d'acquisition 110, le module d'acquisition 45 acquiert soit la puissance électrique échangée entre ladite sous-station 20 et au moins l'un des véhicules 5, soit le courant circulant entre ladite sous-station 20 et au moins l'un des véhicules 5.

Lors d'une étape de détermination 120, le module de traitement 50 détermine une périodicité des données acquises. A cet effet, le module de traitement 50 détermine par exemple une période de répétition des données acquises. Par période de répétition, il est entendu ici que les données acquises sont périodiques et que la période de répétition est un intervalle temporel de répétition desdites données.

En effet, dans un fonctionnement nominal du système ferroviaire 1, les véhicules 5 circulent périodiquement sur les voies 10 de sorte que, du point de vue de chaque sous-station 20, des échanges de puissance avec des véhicules ferroviaires 5 interviennent de manière périodique. La période de répétition desdites données correspond alors à un intervalle temporel (de l'anglais *headway*), aussi appelé intervalle temporel d'exploitation, entre deux véhicules ferroviaires 5. A titre d'exemple, cet intervalle est compris entre 80 secondes et 900 secondes. Cet intervalle correspond, pour un point de passage prédéfini des voies 10, à la durée s'écoulant entre le passage de deux véhicules ferroviaires 5.

Cet intervalle est susceptible d'évoluer au cours du temps. En effet, dans le cadre du métro ou du tramway par exemple, l'intervalle entre deux véhicules 5 n'est pas nécessairement constant au cours de la journée. En particulier, aux heures de pointe, où le trafic est dense, un plus grand nombre de véhicules 5 circulent en même temps sur les voies 10 qu'aux heures creuses, où le trafic est moins dense. Ainsi, l'intervalle entre deux véhicules 5 est réduit lorsque le trafic est dense.

Lors de l'étape de détermination 120, le module de traitement 50 compare par exemple les données acquises à l'instant courant, aux données acquises à des instants antérieurs, avantageusement pour chaque sous-station 20.

Optionnellement, le module de traitement 50 compare les données acquises à l'instant courant, ou dans un intervalle temporel prédéfini précédant l'instant courant, aux données acquises à chacun des instants antérieurs compris dans un intervalle antérieur de même durée. L'intervalle temporel prédéfini précédant l'instant courant est appelé intervalle courant. La largeur dudit intervalle courant est par exemple comprise entre 80 secondes et 900 secondes.

En complément facultatif, le module de traitement 50 compare les données acquises dans l'intervalle temporel prédéfini précédant l'instant courant, aux données acquises dans l'intervalle antérieur de même durée, par exemple décalé par rapport à l'instant courant de 80 secondes. Si les données acquises dans l'intervalle courant sont sensiblement égales aux données acquises dans l'intervalle antérieur, le module de traitement 50 détermine la période de répétition des données comme étant égale au décalage entre l'intervalle courant et l'intervalle antérieur, par exemple 80 secondes.

Sinon, le module de traitement 50 compare alors les données acquises dans un deuxième intervalle, par exemple cette fois de 81 secondes avant l'instant courant, aux données acquises dans l'intervalle antérieur. Dans le cas où des données sont acquises chaque seconde, le deuxième décalage est égal à 81 secondes. Le module de traitement 50 réitère donc cette comparaison jusqu'à déterminer la période de répétition des données acquises.

Si le module de traitement 50 a comparé les données acquises dans l'intervalle courant avec les données acquises dans l'intervalle antérieur, sans réussir à déterminer la période de répétition des données, alors le procédé retourne à l'étape d'acquisition 110. Un tel cas est notamment envisageable lorsqu'un événement inattendu arrive sur les voies 10. Un évènement inattendu est par exemple un incident ou un arrêt du trafic. En effet, dans un tel cas, un intervalle entre deux véhicules ferroviaires 5 n'est plus nécessairement compris entre 80 secondes et 900 secondes.

Lors d'une deuxième étape de détermination 130, le module de traitement 50 détermine, pour chaque sous-station 20, une valeur actualisée de la tension à vide correspondant à cette sous-station 20 à partir d'une grandeur dépendant des données représentatives d'un échange de puissance électrique entre ladite sous-station de traction 20 et au moins un des véhicules ferroviaires 5. A cet effet, lors de la deuxième étape de détermination 130, le module de traitement 50 applique, à la grandeur dépendant des données acquises, au moins l'un parmi un algorithme d'optimisation, et un modèle pré-entraîné par apprentissage automatique. Ainsi, le module de traitement 50 détermine, pour chaque sous-station 20, une valeur actualisée de tension à vide destinée à égaliser ladite grandeur entre chaque sous-station 20.

La grandeur dépend avantageusement des données acquises et de la période déterminée lors de la première étape de détermination 120. Plus spécifiquement, la grandeur est par exemple, pour chaque sous-station 20, la moyenne quadratique (de l'anglais *Root Mean Square*) de la ou chaque donnée acquise correspondant à cette sous-station 20, pendant la période de répétition desdites données.

Autrement dit, lorsque la période est égale à 80 secondes, la grandeur est égale, pour chaque sous-station 20, à la moyenne quadratique des données acquises entre l'instant courant et un instant antérieur égal à l'instant courant moins 80 secondes, c'est-à-dire la moyenne quadratique des données acquises dans les 80 dernières secondes. A titre d'exemple, la grandeur est, pour chaque sous-station 20, la moyenne quadratique du courant circulant entre ladite sous-station 20 et les véhicules ferroviaires 5, ou la moyenne quadratique de la puissance échangée entre ladite sous-station 20 et les véhicules ferroviaires 5, durant la période déterminée.

Puis, toujours lors de la deuxième étape de détermination 130, le module de traitement 50 applique, à la grandeur représentative de chaque sous-station 20, l'un parmi l'algorithme d'optimisation et le modèle pré-entraîné par apprentissage automatique. L'application de cet algorithme ou de ce modèle, produit, pour chaque sous-station 20, une valeur actualisée de tension à vide.

Lors d'une étape d'envoi 140, le module d'envoi 55 envoie à chaque organe de réglage 30, la valeur actualisée de tension à vide correspondante. Suite à cet envoi, chaque organe de réglage 30 règle la tension à vide de la sous-station 20 correspondante.

Le modèle ou l'algorithme appliqué a pour effet de réduire les valeurs de tension à vide des sous-stations 20 pour lesquelles la grandeur est la plus élevée. En effet, une réduction de la tension à vide d'une sous-station 20 implique une réduction de sa charge, i.e. une réduction de la grandeur associée.

Optionnellement, suite à l'étape d'envoi 140, le procédé retourne à la deuxième étape de détermination 130, et réitère l'évaluation de la grandeur, à la période suivant celle pour laquelle les valeurs actualisées de tension à vide ont été déterminées. Ainsi, le module de traitement 50 vérifie l'effet des valeurs actualisées de tension à vide sur l'évolution de la grandeur.

En complément facultatif, le module de traitement 50 mémorise pour chaque période déterminée précédemment, les valeurs actualisées de tension à vide correspondantes. Ainsi, lors de la première étape de détermination 120, si la période déterminée est sensiblement égale à une période déjà connue par le module de traitement 50, ledit module 50 détermine les valeurs actualisées de tension à vide correspondantes à partir de sa mémoire, c'est-à-dire sans application du modèle pré-entraîné ou de l'algorithme d'optimisation.

En variante ou en complément facultatif, suite à l'étape d'envoi 140, et si la période déterminée lors de la première étape de détermination 120 change, le module de traitement 50 génère la valeur actualisée de tension à vide de chaque sous-station 20 comme étant égale à la moyenne des tensions à vide déterminées lorsque la période était constante. Puis, le module de traitement 50 détermine de nouveau, lors de la deuxième étape de détermination 130, une nouvelle valeur actualisée de tension à vide pour chaque sous-station, à partir de la nouvelle période déterminée.

Selon le complément facultatif dans lequel les stations 20 sont propres à récupérer une puissance électrique depuis les véhicules, lors de la deuxième étape de détermination 130, les valeurs de tension à vide sont déterminées uniquement à partir des données représentatives d'une fourniture de puissance électrique par la ou les sous-stations 20. Autrement dit, les valeurs de tension à vide ne sont déterminées qu'à partir des données représentatives d'un échange de puissance électrique dans un seul sens, celui qui va de la sous-station 20, vers les véhicules 5.

Avec le procédé d'ajustement selon l'invention, les valeurs de tension à vide de chaque sous-station 20 sont ajustées au cours du temps, et non prédéfinies.

Ainsi, lorsque le trafic des véhicules ferroviaires 5 évolue, les valeurs des tensions à vide de chaque sous-station 20 évoluent également. Ceci permet donc que les valeurs de tension à vide de chaque sous-station 20 soient continuellement optimisées au trafic des véhicules ferroviaires 5.

Un tel ajustement des valeurs de tension à vide de chaque sous-station 20 est donc réalisé en temps réel. L'expression « temps réel » signifie ici que l'ajustement prend en compte des paramètres courants du trafic de véhicule ferroviaire 5. Ainsi, « l'ajustement en temps réel » est entendu comme l'opposé d'un ajustement prédéfini, par exemple, lors d'une étape de conception.

## Revendications

1. Procédé d'ajustement du fonctionnement d'un système d'alimentation électrique (15) d'un ensemble de véhicules ferroviaires (5), le système d'alimentation (15) comprenant une pluralité de sous-stations de traction (20) ;
chaque sous-station de traction (20) étant propre à échanger de la puissance électrique avec au moins l'un des véhicules ferroviaires (5) et comprenant un organe (30) de réglage de sa tension à vide ;
le procédé étant mis en oeuvre par un dispositif électronique d'ajustement (25) et comprenant les étapes suivantes:
- acquisition (110), depuis chaque sous-station de traction (20), de données représentatives d'un échange de puissance électrique entre ladite sous-station (20) et au moins un des véhicules ferroviaires (5) ;
- détermination (120), d'une périodicité des données acquises ;
- détermination (130), pour chaque sous-station de traction (20), d'une valeur actualisée de la tension à vide correspondant à cette sous-station (20) à partir d'une grandeur dépendant des données représentatives d'un échange de puissance électrique entre ladite sous-station de traction (20) et au moins un des véhicules ferroviaires (5), la grandeur dépendant également de la périodicité déterminée lors de la première étape de détermination (120),
- envoi (140), à l'organe de réglage (30) de chaque sous-station de traction (20), de la valeur actualisée de la tension à vide correspondant à cette sous-station de traction (20).

2. Procédé selon la revendication 1, dans lequel les données représentatives d'un échange de puissance électrique entre ladite sous-station (20) et au moins un des véhicules ferroviaires (5) comprennent au moins l'un parmi :
- un courant circulant entre ladite sous-station (20) et un des véhicules (5) ; et
- une puissance électrique échangée entre ladite sous-station (20) et un des véhicules (5).

3. Procédé selon la revendication 1 ou 2, dans lequel suite à l'étape d'envoi (140), le procédé est réitéré au moins une fois.

4. Procédé selon l'une quelconque des revendications précédentes, dans lequel l'étape de détermination de périodicité (120) comprend la comparaison des données acquises dans un intervalle temporel prédéfini précédant un instant courant, aux données acquises dans un intervalle antérieur de même durée,
si les données acquises dans l'intervalle temporel prédéfini précédant l'instant courant sont sensiblement égales aux données acquises dans l'intervalle antérieur, la périodicité est égale à un décalage entre l'intervalle temporel prédéfini précédant l'instant courant et l'intervalle antérieur.

5. Procédé selon l'une quelconque des revendications précédentes, dans lequel l'étape de détermination de valeurs actualisées de tension à vide (130) comprend, pour chaque sous-station (20), l'application, à la grandeur dépendant des données représentatives d'un échange de puissance électrique entre ladite sous-station (20) et au moins un des véhicules ferroviaires (5), de l'un parmi un algorithme d'optimisation et un modèle pré-entraîné par apprentissage automatique, pour obtenir, pour chaque sous-station (20), une valeur actualisée de tension à vide destinée à égaliser ladite grandeur entre chaque sous-station (20).

6. Procédé selon l'une quelconque des revendications précédentes, dans lequel si l'étape (120) de détermination d'une périodicité des données acquises échoue, l'étape suivante est une nouvelle étape (110) d'acquisition des données.

7. Produit programme d'ordinateur comprenant des instructions logicielles qui, lorsque mises en oeuvre par un équipement informatique, mettent en oeuvre le procédé d'ajustement selon l'une quelconque des revendications précédentes.

8. Dispositif électronique d'ajustement (25) comprenant des moyens techniques adaptés pour implémenter le procédé d'ajustement selon l'une quelconque des revendications 1 à 6.

9. Système d'alimentation électrique (15) comprenant un ensemble de sous-stations de traction (20) et un dispositif électronique d'ajustement (25), chaque sous-station (20) étant propre à échanger une puissance électrique avec au moins un véhicule ferroviaire (5), chaque sous-station de traction (20) comprenant un organe (30) de réglage d'une tension à vide de la sous-station (20),
le dispositif électronique d'ajustement (25) étant selon la revendication 8.

10. Système d'alimentation électrique (15) selon la revendication 9, dans lequel l'organe (30) de réglage de chaque sous-station (20) est un convertisseur électronique pilotable configuré pour régler la tension à vide de ladite sous-station (20) par logiciel.
